# EUROPEAN PATENT APPLICATION

(11) **EP 1 354 903 A1**
(43) Date of publication of application: **22.10.2003**
(21) Application number: 03008514.6
(22) Date of filing: 12.04.2003
(51) Int. Cl.: C08G 18/24, C08G 18/16, C08G 18/76

(54) **Delayed action tin catalysts**

(30) Priority: 18.04.2002 US 126111
(71) Applicant: Crompton GmbH, 59192 Bergkamen (DE)
(72) Inventor: Gerkin, Richard M., Cross Lanes, West Viginia, 26313 (US); Schuhmacher, Oliver, Dr., 59368 Werne (DE)
(74) Representative: Jönsson, Hans-Peter, Dr.Dipl.-Chem.

(57) **Abstract**

An improvement in a process wherein an organotin compound is used as a catalyst is disclosed, wherein the improvement comprises:
A) employing a latent catalyst that is substantially catalytically ineffective at room temperature, wherein said latent catalyst is selected from the group consisting of unsymmetrically substituted tetrahydrocarbyl tin compounds of the formula:

   RₓR'₄₋ₓSn

   wherein
   R is a hydrocarbyl group that is substantially inert under usual conditions of storage and use,
   R' is a hydrocarbyl group that is more reactive than R under conditions of use,
   x is 1, 2, or 3; and
B) then heating the curable mixture to a temperature in the range of from about 30 up to about 99° C to activate the catalyst.

## Description

### BACKGROUND OF THE INVENTION

The present invention is related to the use of simple tin catalysts that show significant delayed action character in catalyzing the reaction between isocyanates and polyols. More particularly, the present invention is related to the use of unsymmetrically substituted tetrahydrocarbyl derivatives of tin, RₓR'₄₋ₓSn, wherein x is 1-3, preferably 2, which provide very long delays in the "time to gel" for various elastomer systems, but which are easily activated through the application of heat to the system.

Tin compounds are well known in the polyurethane art as very effective catalysts for the isocyanate-polyol (often called the gel) reaction. Indeed, these catalysts are so effective that, in many applications, they are classified as being too fast. The problem here is that conventional tin compounds cause the viscosity of the polyurethane system to rise very quickly after all of the components are mixed. This, in turn, causes significant processing problems in filling large or complex molds owing to premature gelation. Another drawback of state-of-the-art catalysts is their lack of stability against hydrolysis and chemical attack. Reaction with water, acids, and bases may cause loss of catalytic activity and even total deactivation.

One of the most effective approaches to solve this problem was to use mercury derivatives as the delayed action catalyst. Compounds such as phenylmercuric propionate and phenylmercuric acetate have long been known as the very best delayed action catalyst candidates available, giving long induction times and good cure. Other approaches include the use of specified derivatives of tin, including the dialkyltinmercaptides and the dialkyltin-dithioglycolates. These compounds show reasonable delay, but are not as strong in the delay effect as the mercury derivatives.

Additionally, the reaction of conventional tin (IV) salts, such as dibutyltin dilaurate, with certain amines to produce a delayed action complex is known in the art.

Acetylacetonate derivatives of nickel are known as very effective delayed action urethane catalysts. Drawbacks of acetylacetonate catalysts are release of volatile organic matter upon application, as well as instability when contacted by water, acids, or bases.

U.S. Patent Nos. 3,392,128 and 3,392,153 disclose that organotin compounds characterized by the presence therein of at least one direct carbon to tin bond are suitable for accelerating the reactions of organic compounds having one or more reactive NCY groups, in which Y is oxygen or sulfur, with compounds having groups containing active hydrogen. It is further disclosed that, among the many types of tin compounds having carbon to tin bonds that are active are:
(A) tin compounds having four carbon to tin bonds and no intensifying bonds, including unsymmetrical compounds exemplified by 2-cyanoethyl-tributyltin, dibutyldiphenyltin, and various addition products of alkyl, aryl, and aralkyltin hydrides with unsaturated organic compounds, such as acrylonitrile, allyl cyanide, crotonitrile, acrylamide, methyl acrylate, allyl alcohol, acroleindiethyl acetal, vinyl acetate, and styrene;
(B) tin compounds having *n* carbon to tin bonds and 4-*n* intensifying bonds from tin to halogen or hydrogen atoms or hydroxyl groups in which *n* is an integer from 1 to 3;
C) tin compounds having two carbon to tin bonds and a catalytically intensifying double bond from tin to oxygen or sulfur;
D) tin compounds having *n* carbon to tin bonds and 4-*n* intensifying bonds from tin to oxygen, sulfur, nitrogen or phosphorus linking organic radicals, *n* being an integer from 1 to 3; and
E) polystannic compounds having carbon to tin bonds and preferably also intensifying bonds from tin to halogen, hydrogen, oxygen, sulfur, nitrogen or phosphorus.

U.S. Patent No. 3,523,103 discloses a process of making a cured polymer such as polyurethane by forming a mixture of a polyisocyanate and an active hydrogen-containing compound, e.g., a polyol, which is reactive therewith on curing, which comprises incorporating into said mixture a latent catalyst which is ineffective to cure said mixture at room temperature, the latent catalyst being an organotin compound, and then heating said curable mixture to a temperature of at least 100° C to activate said catalyst and cure said mixture. The use of hexahydrocarbylditin compounds R₃SnSnR₃ and tetrahydrocarbyltin compounds R₄Sn as latent, temperature activated catalysts is specifically disclosed.

U.S. Patent No. 3,582,501 discloses the acceleration of reactions between compounds having a reactive group of the formula -N=C=Y, in which Y is oxygen or sulfur, with active hydrogen-containing compounds by the addition of a catalyst composition comprising a tertiary amine and an organotin compound having at least one direct carbon to tin bond.

U.S. Patent No. 3,836,488 discloses urethanes produced from isocyanate reactions with active hydrogen containing compounds using tris{-(dimethylamino)ethyl}amine as a catalyst.

U.S. Patent No. 4,119,585 discloses that the combination of a diorganotin sulfide, -polysulfide, -dithiocyanate, bis(thiocyanato diorganotin) sulfide or bis(thiocyanato diorganotin) oxide with a tertiary amine functions as a latent catalyst for rigid polyurethane foams. Latency was not observed using a tertiary amine with other sulfur-containing organotin compounds.

U.S. Patent No. 5,491,174 discloses catalyst compositions comprising complexes of tin(IV) salts and amine compounds that are used to prepare polyurethanes, polyureas, polycarbodiimides and polyisocyanurates. The complexes, which preferably employ primary amines, allow delay of gelation until they dissociate under certain reaction conditions. The complexes can be prepared neat or in situ in an active hydrogen-containing formulation component. The complexes serve to delay gelation of the formulation because they can be prepared to be relatively stable to moisture and will dissociate upon heating, either as a result of the exothermic nature of the reaction being catalyzed or with application of an external heat source. The catalyst compositions are said to be particularly useful for preparation of carpet underlay and in other applications requiring significant delay prior to gelation.

European Patent EP 0 343 086, which is understood to be equivalent to U.S. Patent Nos. 5,051,521 and 5,084,543, discloses tetracoordinated tin (IV) compounds, which are said to be useful as latent catalysts for the preparation of polyurethanes or for the crosslinking of curable diorganopolysiloxanes (upon thermal decomposition thereof into diorganotin dicarboxylates or dialcoholates), and have the general formula:

(R)₂Sn-{-CH(R₁)-CH(R₂)-O-(-C(O)-)ₐ-R₃}₂

in which the radicals R, which may be the same or different, are each a linear or branched chain C₁-C₂₀ alkyl radical, a mononuclear aryl radical, or an aralkyl or alkaryl radical, the alkyl moieties of which have from 1 to 6 carbon atoms; the radicals R₁ and R₂, which may be the same or different, are each a hydrogen atom, a cyano radical, a C₁-C₆ alkyl radical, or an alkoxycarbonyl radical, the alkyl moiety of which has from 1 to 6 carbon atoms, with the proviso that R₁ and R₂ may together form a saturated hydrocarbon ring member having from 5 to 8 carbon atoms; the radical R₃ is a hydrogen atom, a linear or branched chain C₁-C₂₀ alkyl radical, a linear or branched chain C₁-C₂₀ alkoxy radical, a mononuclear aryl radical or a mononuclear aryloxy radical; and a is 0 or 1.

The disclosures of the foregoing are incorporated herein by reference in their entirety.

The present invention is directed to simple organotin compounds having very good delayed action catalytic character, enhanced stability with respect to hydrolysis and chemical attack, and reduced toxicity relative to many of the delayed action products known in the art.

These organotin compounds show significant delayed action character in themselves, not requiring further complexation or modification to make them effective. Furthermore, they can be activated by simply heating the system to a suitable temperature either prior to or during the cure step.

The compounds can be used as delayed action catalysts in all fields of applications where organotin compounds are known to be useful as catalysts.

More particularly, the present invention is directed to an improvement in a process wherein an organotin compound is used as a catalyst, wherein the improvement comprises:
A) employing a latent catalyst that is substantially catalytically ineffective at room temperature, wherein said latent catalyst is selected from the group consisting of unsymmetrically substituted tetrahydrocarbyl tin compounds of the formula:

   RₓR'₄₋ₓSn

   wherein R is a hydrocarbyl group that is substantially inert under usual conditions of storage and use,
   R' is a hydrocarbyl group that is more reactive than R under conditions of use, x is 1, 2, or 3; and
B) then heating the curable mixture to a temperature in the range of from about 30 up to about 99° C to activate the catalyst.

In a preferred embodiment, the present invention is directed to an improvement in a process for making a cured polymer by forming a mixture of an organic polyisocyanate and an active hydrogen-containing compound that is reactive therewith on curing to provide a polymer, and shaping and curing said mixture, wherein the improvement comprises:
A) incorporating into said mixture a latent catalyst that is substantially ineffective to cure said mixture at room temperature, wherein said latent catalyst is selected from the group consisting of unsymmetrically substituted tetrahydrocarbyl tin compounds of the formula:

   R₂R'₂Sn,

   wherein R is a hydrocarbyl group that is substantially inert under usual conditions of storage and use, and R' is a hydrocarbyl group that is more reactive than R under conditions of use; and
B) then heating the curable mixture to a temperature in the range of from about 30 up to about 99° C to activate said catalyst and cure said mixture. In urethane systems, this heating is in addition to the well-known temperature increase usually associated with the reaction of active hydrogen-containing compounds and isocyanates.

The present invention is directed to delayed action catalytic organotin compounds containing four direct carbon to tin bonds. The organotin compounds are unsymmetrically substituted, having attached to the tin at least one hydrocarbyl group R, which is basically inert under the conditions of storage and use, and least one hydrocarbyl group which is more reactive than R, being basically inert under the conditions of storage, but becoming reactive under the conditions of use. The compounds can be used as delayed action catalysts in all fields of applications where organotin compounds are known to be useful as catalysts. Such fields include, but are not limited to, catalysis of esterification and transesterification reactions, condensation curing of RTV II silicones, curing of cataphoretic electrodeposition coatings, deblocking of blocked isocyanates, and, especially, curing of the synthesis of polyurethanes by the reaction of isocyanates with polyols.

The delayed action effect of these organotin compounds can be overcome using temperature as an effective trigger to initiate polyurethane polymerization. The temperature can be applied directly to the blend produced after the individual components have been mixed, or to the mold containing the blended components. Another advantage of these catalysts is their superior stability with respect to hydrolysis and chemical attack. Together with delayed action, this enables the design of formulations having particularly long shelf lives.

The preferred compounds that give such results are the unsymmetrically substituted tetrahydrocarbyl tin compounds of the type:

R₂R'₂Sn,

where R is a hydrocarbyl group that is basically inert under usual conditions of storage and use, and R' is a hydrocarbyl group that is more reactive than R under conditions of use.

R is an alkyl group, typically n-alkyl, and especially C₁-C₁₂ alkyl, such as methyl, ethyl, propyl, butyl, pentyl, hexyl, heptyl octyl, nonyl, decyl, undecyl, and dodecyl. These n-alkyl groups form very firm carbon-tin bonds that are stable up to temperatures of more than 210° C, and are not attacked by the chemicals that are typically present in formulations for the proposed applications. This is well-known in the art. The preferred alkyl group for use in the practice of the present invention contains four or more carbon atoms, e.g., n-butyl or n-octyl.

R' is a hydrocarbyl group that is more labile and/or reactive than R, and is preferably aryl, arylalkyl, or alkenyl, especially phenyl, substituted phenyl, benzyl, substituted benzyl, vinyl, and allyl. Benzyl and phenyl groups are preferred, benzyl is most preferred. These R' groups form carbon-tin bonds that can be cleaved at elevated temperatures by either direct thermal fission or by the action of chemicals that are typically present in formulations for the proposed applications.

In the process of the present invention, the catalyst activation temperature is preferably in the range of from about 30° C up to about 99° C, more preferably from about 30° C to about 90° C, most preferably from about 30° C to about 70° C.

As is well known in the art, tetrahydrocarbyl tin compounds themselves are poor catalysts, while organotin compounds having only 1-3 hydrocarbyl groups attached to tin are strong catalysts for the proposed applications. Thus, by cleaving labile hydrodrocarbyl groups from the tin, but leaving 1-3 hydrocarbyl groups attached thereto, a poor catalyst is turned into a strong one.

In a preferred application, these compounds are used as delayed action catalysts in the preparation of urethane elastomers and foams. In this process, the catalysts are used in conjunction with polyols (polyethers, polymer, polyols, polyesters, polycarbonates, or polycaprolactones), chain extenders (polyfunctional, active hydrogen-containing compounds with molecular weights below 400, such as ethylene glycol, 1,4-butanediol, glycerine, trimethylol propane, diethyltoluenediamine, diethanolamine, triethanolamine, and the like), water (optionally), amine catalysts, silicone surfactants, alternate blowing agents, such as pentane (optionally) and isocyanates. The isocyanates are preferably toluenediisocyanate (TDI) and its derivatives or diphenylmethane diisocyanate (MDI) and its derivatives, including polymeric versions, pure 4,4'-diphenylmethane diisocyanate, MDI prepolymers, and the liquid MDI variants. The catalysts are preferably used in a concentration range of from about 0.005 to about 5.0 parts of catalyst per 100 parts by weight of the polyol component in the system (php). More preferably, the concentration range is from about 0.05 to about 2.0 php.

The advantages and the important features of the present invention will be more apparent from the following examples.

### EXAMPLES:

### Glossary:

Polyol 1 is a 3500 MW polyether polyol available from BASF as Systol 151.
Polyol 2 is a 34 hydroxyl number EO/PO polyether polyol available from Lyondell.
Polyol 3 is a polyester polyol available from Crompton Corporation as Fomrez 21-56.
Polyol 4 is a polyester polyol available from Crompton Corporation as Fomrez 24-56.
Isocyanate 1 is toluene diisocyanate, 80%/20% 2,4-/2,6-isomers.
Isocyanate 2 is a diphenylmethane diisocyanate variant available from The Dow Chemical Company as Isonate 143L, 29% free NCO.
Isocyanate 3 is a diphenylmethane diisocyanate/polyester polyol prepolymer available from Bayer as Baydur 505.
Tin Catalyst 1 is dimethyltin dineodecanoate
Tin Catalyst 2 is dioctyltin bis-isooctylthioglycolate
Tin Catalyst 3 is dibutyltin dilaurate.
TBT is tetrabutyltin.

### Example 1:

### Preparation of Dibutyldibenzyltin

Into a 3-neck glass flask, equipped with a mechanical stirrer, thermometer, reflux condenser, and dropping funnel, were placed 109.4 grams of dibutyltindichloride (0.36mol) and 150 ml of dry diethylether. The mixture was stirred until the dibutyltindichloride was completely dissolved. Into the dropping funnel was placed 800 ml of a 1 molar solution of benzylmagnesium chloride in dry diethylether (0.8 mol). The benzylmagnesium chloride solution was slowly added with stirring to the dibutyltindichloride solution, maintaining a maximum reaction temperature of 25° C. After complete addition of the benzylmagnesium chloride, the reaction mixture was stirred for another 2 hours at room temperature.

The reaction mixture was mixed with 250 grams of ice and 15 ml of concentrated sulfuric acid, allowed to settle, and separated by means of a separatory funnel. The organic phase, containing the product, was dried with anhydrous sodium sulfate, and subsequently the solvents were removed by means of a rotary evaporator (at 70° C / 15 mbar).

Analysis: product contained 28.4 % Sn (theory: 28.6), 97.1% dibutyldibenzyltin, and 1.1% dibenzyl.

Thermal stability: DSC analysis showed an exothermic peak of 37 J/g at 160° C.

### Example 2:

### Viscosimetric Catalyst Activity Tests

### (Non chain-extended elastomer, TDI based)

Stoichiometric amounts of Isocyanate 1 ( 80% para, and 20% ortho) and Polyol 1 were mixed in a glass bottle together with the respective organotin catalyst. The catalyst concentration was 0.005 mol of organotin catalyst per 1 kg of Polyol 1. The raw mixture had a Brookfield viscosity of << 1 Pa*s. Sample temperature and viscosity were recorded until the mixture became too viscous for further measurement (> 25 Pa*s).

These tests were performed under four different conditions, in order to distinguish between the influence of time, temperature, and potential catalyst hydrolysis on curing speed:
VT.1. Reaction at room temperature without external heating.
VT.2. Catalyst and polyol were mixed, 0.1% water was added, and the mixture was stored for three days at 50° C. Then, the reaction was run at room temperature as described in VT.1.
VT.3. Reaction at variable temperature. The room temperature sample was placed in an oil bath that was heated at a constant rate to 100° C and then held at this temperature (heating to 100° C typically takes approximately twenty minutes).
VT.4. Catalyst and polyol were mixed, 0.1% water was added, and the mixture was stored for three days at 50° C. Then, the reaction was run at variable temperature as described in VT.3 above.

The results of the above are shown in Tables VT.1 through VT.4.

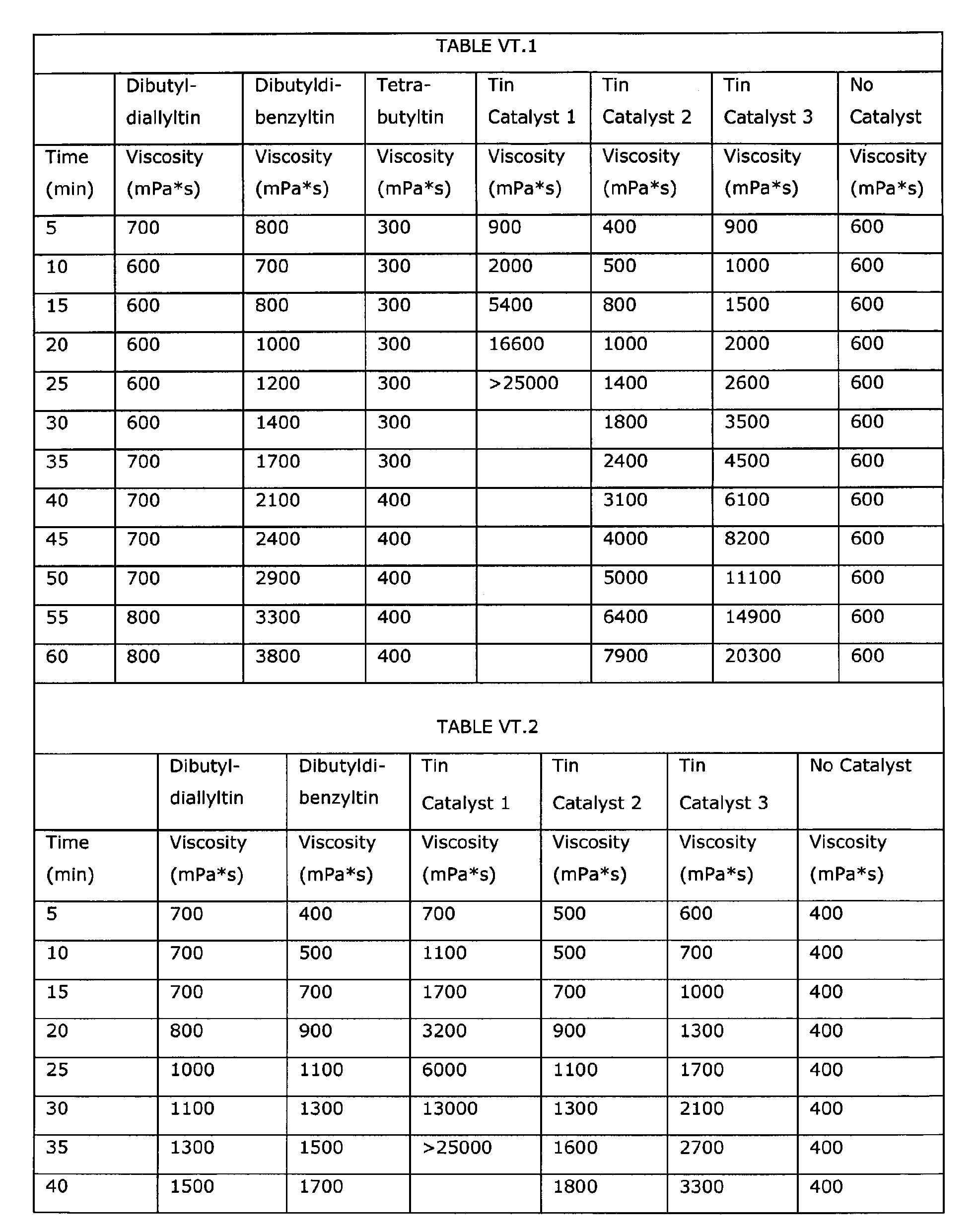

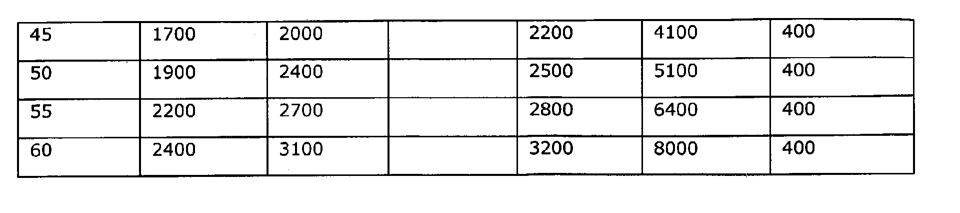

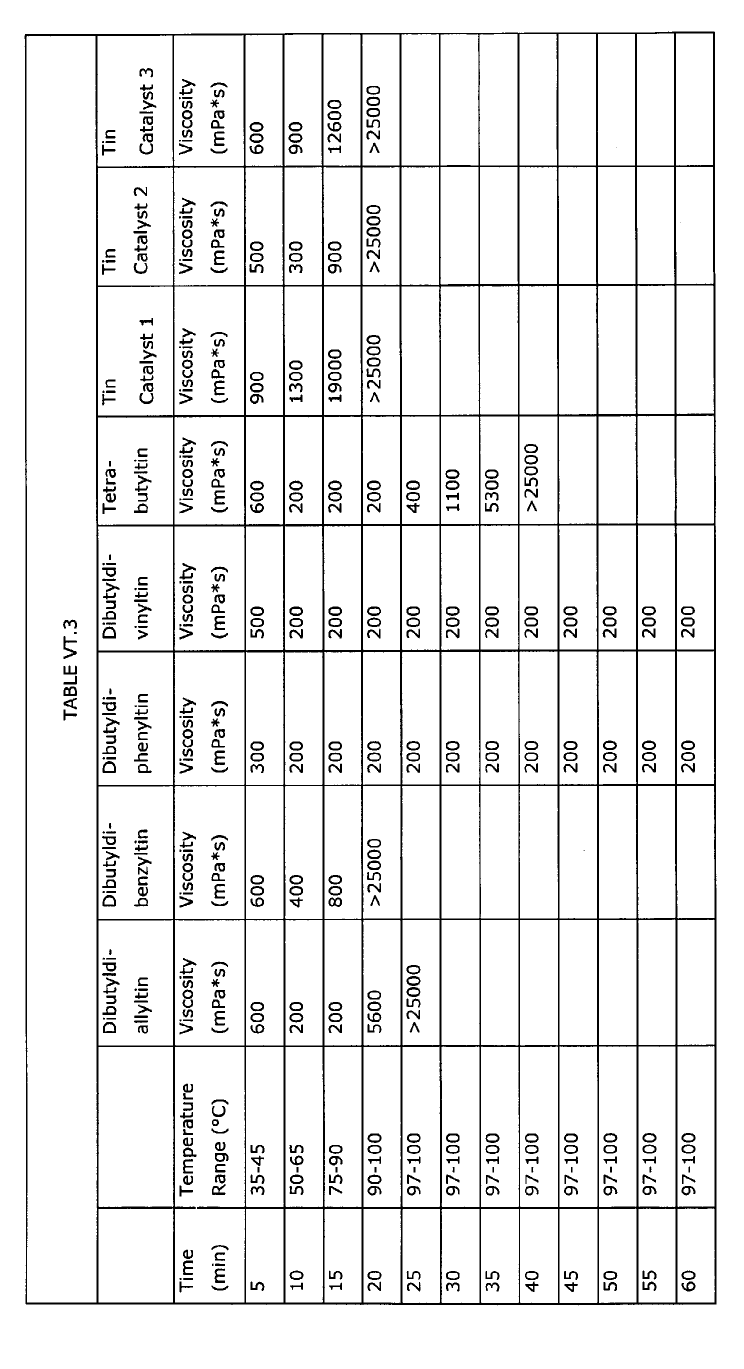

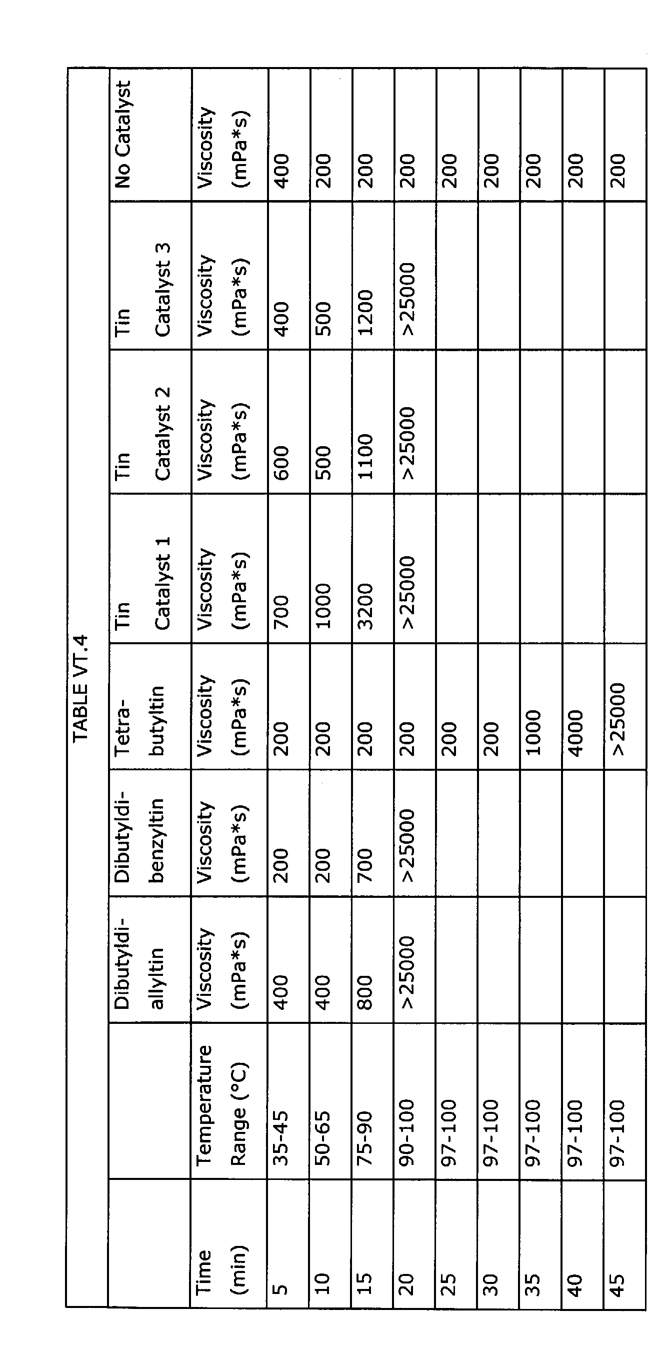

### Example 3

### Viscosimetric Catalyst Activity Tests (Chain extended elastomer, MDI Based)

### 1. Polyether Elastomer Formulation (Chain extended, based on MDI)

| | |
|---|---|
| Polyol 2 | 94 |
| Ethylene Glycol | 6 |
| Isocyanate 2 | 103 Index* |

| | |
|---|---|
| *The term 103 Index means that 103% of the theoretically required stoichiometric amount of isocyanate was used. This is terminology familiar to those skilled in the art. | |

### 2. Procedure

A preblend of the polyol and ethylene glycol was prepared and used for all experiments. This preblend and the isocyanate to be used were heated in an oven to the prescribed temperature. The correct amount of preblend (typically 175.0 g) was then weighed directly into a quart paper cup, and the isocyanate (typically 65.0 g) weighed into a separate pint paper cup.

The mixer was a Delta drill press equipped with a shielded mixing blade. The mixer was run at 4300 rpm.

Timing of the mixing process was controlled using a Gra-Lab electronic timer set to the following sequence: 10-second premix, 5-second wait, 6-second mix, 3-minute wait.

In a given run, catalyst was added to the preblend in the quart cup. This cup was placed on the drill press, and the timer started. The isocyanate was added during the 5-second wait period, and the mixing continued as per the settings. At this point, the mixture was poured into an insulated one pint paper cup equipped with a thermocouple and a recording Brookfield viscometer. Exotherm and viscosity *vs*. time outputs were measured simultaneously. This elastomer system exotherms to about 105° C in this reactor, and the viscosity/time profile was measured until the viscosity reached 100,000 cps.

### 3. Results

The significant delayed behavior of dibutyldiphenyl tin and dibutyldibenzyl tin when compared to control catalysts Tin Catalyst 1 (a very active catalyst) and Tin Catalyst 2 (a well known delayed action catalyst) are shown in Table 5. This table also shows that these catalysts can be activated by applying heat to the system, at least over the range between 30 and 70° C.

**Table 5**

| Effect of Temperature | | |
|---|---|---|
| Catalyst, 2.99×10⁻⁴ mole | Reaction temp. (° C) | Time to 100,000 cps (sec) |
| Tin Catalyst 1 (Control) | 30 | <10 |
| Tin Catalyst 2 (Control) | 30 | 81 |
| Dibutyldiphenyltin | 30 | 1762 |
| Dibutyldibenzyltin | 30 | 1022 |
| Tetrabutyltin | 30 | 2500 |
| Tin Catalyst 2 (Control) | 40 | 65 |
| Dibutyldiphenyltin | 40 | 1360 |
| Dibutyldibenzyltin | 40 | 942 |
| Tin Catalyst 2 (Control) | 45 | 54 |
| Dibutyldiphenyltin | 45 | 1320 |
| Dibutyldibenzyltin | 45 | 730 |
| Tin Catalyst 2 (Control) | 60 | 25 |
| Dibutyldiphenyltin | 60 | 1005 |
| Dibutyldibenzyltin | 60 | 600 |
| Tin Catalyst 2 (Control) | 70 | na |
| Dibutyldiphenyltin | 70 | 499 |
| Dibutyldibenzyltin | 70 | 219 |

The data in Table 6 confirm that both dibutyldiphenyltin and dibutyldibenzyltin show significantly more delay than either of the controls, even when catalyst concentration and/or temperature is increased.

**Table 6**

| Effect of Concentration and Temperature | | | | |
|---|---|---|---|---|
| Catalyst | Mole (x10⁻⁴) | Grams | Reaction Temp. (°C) | Time to 100,000 cps (sec) |
| Tin Catalyst 1 | 2.99 | 0.189 | 30 | <10 |
| Tin Catalyst 2 | 2.99 | 0.225 | 30 | 81 |
| Tin Catalyst 2 | 2.99 | 0.225 | 60 | 20 |
| Dibutyldiphenyltin | 2.99 | 0.116 | 30 | 1762 |
| Dibutyldiphenyltin | 5.98 | 0.232 | 30 | 1221 |
| Dibutyldiphenyltin | 11.96 | 0.464 | 30 | 770 |
| Dibutyldiphenyl tin | 5.98 | 0.232 | 60 | 600 |
| Dibutyldibenzyltin | 2.99 | 0.124 | 30 | 1022 |
| Dibutyldibenzyltin | 5.98 | 0.248 | 30 | 688 |
| Dibutyldibenzyltin | 11.96 | 0.496 | 30 | 337 |
| Dibutyldibenzyltin | 5.98 | 0.248 | 60 | 243 |

The data in Table 7 confirm that these catalysts show the classic tin/amine synergy when used in conjunction with a typical amine based urethane catalyst.

**Table 7**

| Effect of Added Amine | | | |
|---|---|---|---|
| Catalyst (2.99x10⁻⁴ mole) | TEDA* (php)** | Reaction Temperature (° C) | Time to 100,000 cps (sec) |
| Dibutyldiphenyltin | none | 30 | 1762 |
| Dibutyldiphenyltin | 0.05 | 30 | 1100 |
| Dibutyldibenzyltin | none | 30 | 1022 |
| Dibutyldibenzyltin | 0.05 | 30 | 600 |
| No tin (Amine control) | 0.05 | 30 | 1350 |
| No tin (Amine control) | 0.1 | 30 | 300 |

| | | | |
|---|---|---|---|
| *Triethylene diamine, 33% in Dipropylene Glycol | | | |
| ** The term "php" means "parts per 100 parts of the polyol component". | | | |

The data in Table 8 confirm that the catalysts employed in the practice of the present invention offer significant delayed action characteristics in a variety of different polyurethane systems.

**Table 8**

| Utility in different systems¼ Gel Time, sec (System at 30_C) | | | | |
|---|---|---|---|---|
| | Polyether Systems | | Polyester Systems | |
| | Polyol 2/EG*/Iso 2 | Polyol 2/BDO/Iso 2 | Polyol 3/BDO**/Iso 2 | Polyol 4/EG/Iso 3 |
| | 94/6/103 Index | 85/15/103 Index | 90/10/103 Index | 95/5/103 Index |
| Catalyst | | | | |
| None | >3600 (sec) | na | na | >4000 |
| Tin Catalyst 1 | <10 | na | na | na |
| Tin Catalyst 2 | 81 | 25 | 70 | 130 |
| Dibutyldiphenyltin | 1762 | 445 | 705 | 2500 |
| Dibutyldibenzyltin | 1022 | 360 | 920 | >4000 |

| | | | | |
|---|---|---|---|---|
| *Ethylene glycol | | | | |
| **1,4-Butanediol | | | | |

In view of the many changes and modifications that can be made without departing from principles underlying the invention, reference should be made to the appended claims for an understanding of the scope of the protection to be afforded the invention.

## Claims

1. Use of an organotin compound as a catalyst in a process, comprising:
A) employing a latent catalyst that is substantially catalytically ineffective at room temperature, wherein said latent catalyst is selected from the group consisting of unsymmetrically substituted tetrahydrocarbyl tin compounds of the formula:
RₓR'₄₋ₓSn
wherein
R is a hydrocarbyl group that is substantially inert under usual conditions of storage and use,
R' is a hydrocarbyl group that is more reactive than R under conditions of use, x is 1, 2, or 3; and
B) then heating the curable mixture to a temperature in the range of from about 30 up to about 99° C to activate the catalyst.

2. Use of claim 1 wherein the process is selected from the group comprising:
A) esterification and transesterification reactions;
B) condensation curing of RTV II silicones;
C) curing of cataphoretic electrodeposition coatings;
D) deblocking of blocked isocyanates; and,
E) curing the synthesis of polyurethanes by the reaction of isocyanates with polyols.

3. Process for making a cured polymer by forming a mixture of an organic polyisocyanate and an active hydrogen-containing compound that is reactive therewith on curing to provide a polymer, and shaping and curing said mixture, **characterized by**:
A) incorporating into said mixture a latent catalyst that is substantially ineffective to cure said mixture at room temperature, wherein said latent catalyst is selected from the group consisting of unsymmetrically substituted tetrahydrocarbyl tin compounds of the formula:
R₂R'₂Sn,
wherein R is a hydrocarbyl group that is substantially inert under usual conditions of storage and use, and R' is a hydrocarbyl group that is more reactive than R under conditions of use; and
B) then heating the curable mixture to a temperature in the range of from about 30 up to about 99° C to activate said catalyst and cure said mixture.

4. The process of claim 3 wherein R is a C₁-C₁₂ n-alkyl.

5. The process of claim 4 wherein R is n-butyl or n-octyl.

6. The process of claim 3 wherein R' is selected from the group consisting of aryl, arylalkyl, and alkenyl.

7. The process of claim 4 wherein R' is selected from the group consisting of aryl, arylalkyl, and alkenyl.

8. The process of claim 6 wherein R' is selected from the group consisting of phenyl, substituted phenyl, benzyl, substituted benzyl, vinyl, and allyl.

9. The process of claim 7 wherein R' is selected from the group consisting of phenyl, substituted phenyl, benzyl, substituted benzyl, vinyl, and allyl.

10. The process of claim 8 wherein R' is phenyl or benzyl.

11. The process of claim 9 wherein R' is phenyl or benzyl.

12. A process for making a cured polymer by forming a mixture of an organic polyisocyanate selected from the group consisting of MDI and TDI and a polyol that is reactive therewith on curing to provide a polyurethane, and shaping and curing said mixture, **characterized by**:
A) incorporating into said mixture a latent catalyst that is substantially ineffective to cure said mixture at room temperature, wherein said latent catalyst is selected from the group consisting of dibutyldiphenyltin and dibutyldibenzyltin; and
B) then heating the curable mixture to a temperature in the range of from about 30 up to about 99° C to activate said catalyst and cure said mixture.

13. The process of claim 12 wherein the latent catalyst is dibutyldiphenyltin.

14. The process of claim 12 wherein the latent catalyst is dibutyldibenzyltin.
